Europäisches Patentamt

European Patent Office

Office européen des brevets

(19)

(11) Veröffentlichungsnummer: **0 249 653**
**B1**

(12) **EUROPÄISCHE PATENTSCHRIFT**

(45) Veröffentlichungstag der Patentschrift: **09.01.91**

(51) Int. Cl.⁵: **G 11 B 7/09**

(21) Anmeldenummer: **86113775.0**

(22) Anmeldetag: **13.06.84**

(60) Veröffentlichungsnummer der früheren Anmeldung nach Art. 76 EPÜ: **0 134 428**

(54) **Lesevorrichtung zum optischen Abtasten von auf einem beweglichen plattenförmigen Träger aufgezeichneten Informationen.**

(30) Priorität: **09.07.83 DE 3324861**

(43) Veröffentlichungstag der Anmeldung:
**23.12.87 Patentblatt 87/52**

(45) Bekanntmachung des Hinweises auf die Patenterteilung:
**09.01.91 Patentblatt 91/02**

(84) Benannte Vertragsstaaten:
**BE CH FR GB IT LI LU NL**

(56) Entgegenhaltungen:
**DE-A-2 611 617**
**DE-A-2 918 919**
**FR-A-2 517 154**

**PHILIPS TECHNICAL REVIEW, Band 40, Nr. 6, 1982, Seiten 150-155, Eindhoven, NL; M.G. CARASSO et al.: "The compact disc digital audio system"**

**JOURNAL OF SCIENTIFIC INSTRUMENTS (JOURNAL OF PHYSICS E), Serien 2, Band 1, 1968, Seite 352, London, GB; R.F. EDGAR: "The piezoelectric control of spring strip mounts"**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **Kurz, Arthur**
**Jurastrasse 5**
**D-7730 VS-Pfaffenweiler (DE)**
Erfinder: **Kühn, Hans-Robert**
**Haydnweg 9**
**D-7742 St. Georgen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Lesevorrichtung der im Oberbegriff des Hauptanspruchs angegebenen Art. Eine solche Vorrichtung ist aus DE-A-29 18919 bekannt.

Solche Lesevorrichtungen, auch kurz optische Abtaster genannt, dienen dem Auslesen von Audio- und/oder Video-Informationen, die auf einer Audio- bzw. Videoplatte gespeichert sind. Sie sind grundsätzlich auch zum Auslesen anderer optisch lesbarer Daten für die Datenverarbeitung geeignet. Das Prinzip der Speicherung und des Auslesens optisch lesbarer Daten ist allgemein erläutert in Philips tech. REVIEW Volume 40, 1982, No. 6, Seiten 151—155.

Als Datenträger werden üblicherweise plattenförmige, rotierende Aufzeichnungsträger, sogenannte Bildspeicher- oder Videoplatten, verwendet. Anwendbar sind jedoch auch andere Speichermedien, soweit diese eine Licht reflektierende Fläche zur Speicherung optisch lesbarer Daten aufweisen.

Diese Lesevorrichtung besteht im wesentlichen aus einem Abtastkopf mit einer Lichtquelle, in der Regel einem Laserlicht erzeugenden Halbleiter, sowie einer Optik, welche ein oder mehrere Lichtflecke auf der Trägerfläche erzeugt. Der Abtastkopf weist ferner Mittel, z.B. Strahlenteiler, zur Trennung des reflektierten Lichtes vom ausgesendeten Licht sowie Detektionselemente zur Umwandlung des reflektierten Lichtes in elektrische Größen auf.

Da die Spurendichte außerordentlich hoch ist, muß der Abtastkopf der Spur mit großer Präzision, nämlich einer Toleranz von ± 0,1 μm, der aufgezeichneten Spur folgen. Diese Genauigkeit ist durch mechanische Präzision nicht erreichbar, da allein die durch Exzentrizität des Aufzeichnungsträgers und des Wiedergabegerätes bedingten Abweichungen ein Mehrfaches des oben angegebenen Toleranzbereiches (bis 300 μm) betragen.

Es sind darum Regeleinrichtungen notwendig, welche den Abtastkopf gesteuert von der aufgezeichneten Spur nachführen.

Bei diesen Regeleinrichtungen liefern die Detektionselemente außer den Informationen ein Spursteuersignal, aus welchem eine Stellgröße zur Auslenkung bzw. Nachführung des Tastkopfes in der gewünschten Richtung hergeleitet wird. Zweckmäßigerweise ist zwischen den Detektionselementen und der das Steuersignal in eine Stellgröße umwandelnden Schaltung ein Tiefpaßfilter vorgesehen, mit welchem die Steuersignale von hochfrequenten Schwingungen und Störimpulsen befreit werden, welche andernfalls eine unerwünschte Auslenkung des Abtastkopfes zur Folge hätten.

Als Detektionselemente eignen sich symmetrisch zur Mittellage des reflektierten Lichtstrahles, also der Spurabbildung, angeordnete Fotodioden, deren Ausgangssignale mit einem Differenzverstärker zur Erzeugung eines dem Spursteuersignal entsprechenden Differenzsignales verarbeitet werden. Ein Spursteuersignal und damit ein Differenzsignal ergibt sich bei einer Verschiebung der Spurabbildung zur Symmetrielinie der Fotodioden, so daß ein Differenzsignal gebildet wird, mit welchem der Radialantrieb des Abtastkopfes zur Spurhaltung angesteuert werden kann (vergl. hierzu auch DE-OS 31 11 714 und 31 21 013).

Voraussetzung für eine exakte Steuerung ist, daß sich die Informationselemente, nämlich die Pits, welche die Spur darstellen, bei Spurmittellage auf den symmetrisch zur Spurabbildung angeordneten Empfangsdioden als Lichtspots gleicher Intensität abbilden.

Diese Voraussetzung ist bei Asymmetrien im optoelektrischen Kreis, also z.B. bei verschmutzten oder gealterten Fotodioden bzw. unsymmetrischer Abstrahlung der Lichtquelle, nicht mehr erfüllt. Das hat zur Folge, daß ein von Null verschiedenes Spursteuersignal erzeugt wird, obwohl der Abtastkopf der Informationsspur entspricht. Das hieraus resultierende radiale Fehlersignal steuert über den Radialantrieb den Abtastkopf so nach, daß, verursacht durch das fehlerhafte Differenzsignal, eine optimale Spurhaltung bzw. ein optimales Auslesen der Information nicht mehr gewährleistet ist. Dieser Fehler konnte bisher nur durch einen vom Service durchzuführenden Neuabgleich korrigiert werden.

Aus der DE-OS 32 42 785 ist an sich eine Lesevorrichtung mit einer Schaltung bekannt, welche die oben beschriebenen, auf Asymmetrien im optoelektrischen Kreis beruhende Spurfolgefehler automatisch korrigiert. Zu diesem Zweck wird der Abtastkopf in von einem Generator erzeugte Schwingungen um die Spurmitte mit einer bestimmten Frequenz derart versetzt, daß die Detektionselemente ein Informationssignal zur automatischen Korrektur des Spurfolgefehlers liefern.

Die hierfür erforderliche Schaltung ist jedoch vergleichsweise aufwendig, da für die Nachführung des verstellbar gelagerten Abtastkopfes, also die Radialregelung, und die Korrektur der Asymmetrien der gleiche Regelkreis verwendet wird.

Der vorliegenden Erfindung liegt gleichfalls die Aufgabe zugrunde, eine Lesevorrichtung mit einer Regelschaltung zu schaffen, welche den oben erläuterten, Asymmetrien im optoelektrischen Kreis korrigierenden Abgleich automatisch durchführt.

Sie geht hierbei jedoch von einer Lesevorrichtung der im Oberbegriff angegebenen Art aus, bei welcher für die Korrektur der Asymmetrien ein gesonderter Regelkreis mit einem eigenen elektromechanischen Wandler zur Verstellung des Abtastkopfes vorgesehen ist.

Gelöst wird diese Aufgabe mit den im Kennzeichen des Anspruchs 1 angegebenen Maßnahmen, mit welchen ein den tatsächlichen Verhältnissen nicht entsprechendes radiales Fehlersignal detektiert und derart kompensiert wird, daß der Abtastkopf auf eine Spurlage zurückgestellt wird, welche den Verhältnissen entspräche, wenn keine Asymmetrien im elektrooptischen Kreis aufgetreten waren.

Nach dem Grundgedanken der Erfindung wird dem Tastkopf mittels eines zusätzlichen Wandlers eine niederfrequente Schwingung geringer Amplitude überlagert und mittels der symmetrisch zur Spurabbildung angeordneten Fotoelemente ein Summensignal gebildet. Dieses Summensignal hat bei symmetrischen Bedingungen im elektrooptischen Kreis den Wert Null bezüglich dieser niederfrequenten Schwingung, bei unsymmetrischen Bedingungen, also z.B. bei Verschmutzung nur einer Fotodiode, einen von Null verschiedenen Wert. Damit kann aus dem Summensignal ein Korrektursignal hergeleitet werden, welches nach einem weiteren Merkmal der Erfindung vorzeichenrichtig zum Ausgleich oben erläuterter Asymmetrien dem auf den Abtastkopf wirkenden elektromechanischen Wandler zuführbar ist.

Die Amplitude der der Tastkopfbewegung überlagerten Schwingung muß unter einem Auslenkungswert bleiben, der für ein sicheres Auslesen der Information unbedenklich ist. Dieser Wert liegt beispielsweise in der Größenordnung von ± 0,05 µm, wobei Generatorschwingungen von 600 Hz geeignet sind.

Zur Einhaltung dieses Grenzwertes ist eine automatische Amplitudenregelung vorgesehen, die Gegenstand des Anspruches 2 ist.

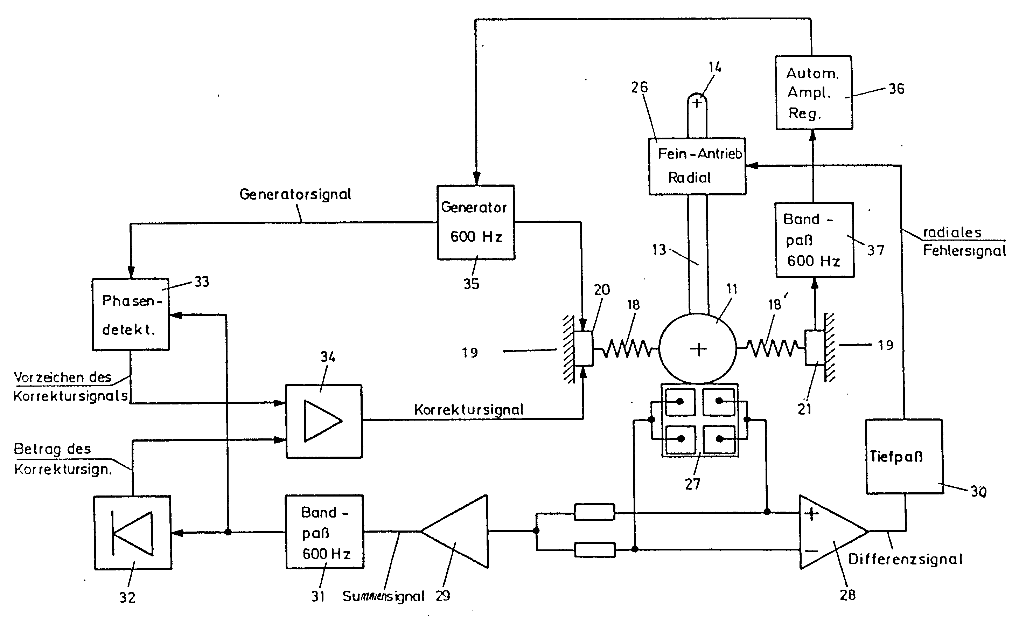

Im übrigen ist der Gegenstand der Erfindung anhand eines Ausführungsbeispieles im einzelnen erläutert. In der Zeichnung ist die erfindungsgemäß gestaltete Schaltung zur Regelung des Abtastkopfantriebes mit einem Blockschaltbild schematisch dargestellt.

Der mechanische Aufbau dieses Abtastkopfes entspricht im übrigen der Darstellung in der DE-OS 33 24 861 (= DE-PS 33 24 861) und EP-A0134428.

Schematisch dargestellt mit einem Kreis ist der Abtastkopf 11, der in seinem Inneren die Lichtquelle und die Optik zur Erzeugung des Lichtbündels und damit des Lichtfleckes auf der Trägerfläche aufweist. Im Abtastkopf untergebracht ist ferner ein Strahlenteiler zur Trennung des reflektierten Lichtes vom ausgesendeten Licht sowie eine Baugruppe, bestehend aus Halbleitersegmenten, nämlich den symmetrisch zur fehlerfreien Spurabbildung angeordneten Fotodioden A,B,C,D in dem Detektionselement 27, welche das reflektierte Licht in elektrische Signale umwandeln. Der Abtastkopf wird von einem Träger 13 gehalten, welcher um die Drehachse 14 mittels des radialen Feinantriebes 26 verschwenkbar ist. Mit diesem läßt sich der Abtastkopf 11 gegen die Wirkung elastisch federnder Rückstellglieder, nämlich der Federn 18 und 18', verschwenken. Die symmetrisch ausgebildeten und vorgespannten Federn 18 und 18' sind zwischen den Halterungen 19 und dem Gehäuse des Abtastkopfes 11 eingespannt. Zwischen den Enden der Halterungen 19 und den Federn 18 bzw. 18' sind druck- bzw. zugempfindliche piozoelektrische Wandler 20 und 21 vorgesehen.

Durch Anlegen einer Spannung an den Wandler 20 läßt sich eine willkürliche Dickenänderung des Wandlers und damit eine willkürliche Auslenkung des Kopfes 11 erreichen. Diese Eigenschaft wird dazu ausgenutzt, den Abtastkopf 11 und damit sein optisches System gesteuert auszulenken.

Plattenförmige Informationsträger der hier in Betracht kommenden Art sind in der Regel kreisscheibenförmig ausgebildet, wobei die Informationen in Spuren, d.h. zentrisch bzw. spiralförmig zum Plattenmittelpunkt, auf dem Träger angebracht sind.

Der Abtastkopf muß, um ein einwandfreies Auslesen der Information zu gewährleisten, dieser Spur mit hoher Genauigkeit folgen. Um dies zu gewährleisten, ist eine Regelschaltung notwendig, welche in Form von Fotodioden ausgebildete Detektionselemente 27 besitzt, die beim Auftreffen des dem Auslesen dienenden reflektierten Lichtstrahles ein Spursteuersignal erzeugen. Dieses Spursteuersignal wird aus den von den Fotodioden A,B,C,D, die beidseitig der Spurabbildung angeordnet sind, erzeugten Signalen gebildet, welche den Eingängen des Differenzverstärkers 28 zugeführt werden. Das an seinem Ausgang gebildete Differenzsignal wird über einen Tiefpaßfilter 30 als radiales Fehlersignal dem radialen Feinantrieb 26 zugeleitet. Mit dem Tiefpaßfilter 30 werden die im Signal enthaltenen höherfrequenten Anteile unterdrückt und insbesondere kurze Störimpulse von dem Radialantrieb ferngehalten, so daß diese keine Radialkorrektur des Abtastkopfes 11 bewirken. Gesteuert vom radialen Fehlersignal erzeugt der radiale Feinantrieb 26 eine Stellgröße, mit welcher der den Abtastkopf 11 tragende Hebelarm 13 um den Drehpunkt 14 so verschwenkt wird, daß der Abtastkopf 11 in der gewünschten Richtung der Spur nachgeführt wird.

In an sich bekannter Weise sind die Fotodioden A,B,C,D derart angeordnet und geschaltet, daß die am Ausgang des Differenzverstärkers 28 gebildete Differenzspannung Null ist, wenn die Dioden A bis D Licht gleicher Lichtintensität empfangen, also symmetrisch zur Spurabbildung gelegen sind. Bei Verschiebung der Spurabbildung wird folglich ein Differenzsignal erzeugt, das über den Regelkreis "Tiefpaß 30, radialer Feinantrieb 26, Detektionselement 27" eine Nachführung des Abtastkopfes zur Spurhaltung bewirkt.

Diese Art der Regelung und Nachführung des Abtastkopfes ist bekannt.

Wie in der Beschreibungseinleitung dargelegt, führt sie bei Asymmetrien im optoelektrischen Kreis zu Fehlauslenkungen des Abtastkopfes.

Diesen wirkt der aus den Detektionselementen 27, dem Operationsverstärker 29, dem Bandpaß 31, dem Gleichrichter 32, dem Verstärker 34 und dem Wandler 20 gebildete zweite Regelkreis in folgender Weise entgegen. Mittels des Operationsverstärkers 29, an dessen beiden Eingängen die Summenspannung der Fotodiode A+C einerseits und B+D andererseits liegt, wird ein Summensignal gebildet, aus welchem ein Korrektursignal hergeleitet wird, das der Ansteuerung des vorzugsweise piozoelektrischen Wandlers 20 zur radialen Lagekorrektur des Abtastkopfes 11 dient.

Zu diesem Zweck wird der Abtastkopf 11 mittels des Wandlers 20, der von einem Generator mit einer Schwingungsfrequenz von 600 Hz angesteuert wird, in Schwingungen versetzt. Die Folge ist, daß auch die Fotodioden Ausgangssignale mit dieser Frequenz erzeugen. Die Anordnung und Schaltung der Fotodioden A bis D hat zur Folge, daß nur bei Unsymmetrien im optoelektrischen Kreis ein von Null verschiedenes Summensignal am Ausgang des Operationsverstärkers 29 erscheint. Auch dieses Summensignal hat die gleiche Frequenz wie die Generatorfrequenz. Es wird über ein Bandpaßfilter 31 geführt, dessen Mittenfrequenz der Frequenz des Generators 35, also z.B. einer Frequenz von 600 Hz, entspricht. Mit dem Bandpaßfilter werden höher- oder niederfrequente Störschwingungen unterdrückt. Nach Passieren des Bandpaßfilters 31 wird das Summensignal mit dem Gleichrichter 32 gleichgerichtet, der folglich ein dem absoluten Betrag des Korrektursignales entsprechendes Signal liefert. Dieses Signal wird dem ersten Eingang des Operationsverstärkers 34 zugeführt.

Um das Vorzeichen des Korrektursignales zu ermitteln, wird das Summensignal vor Gleichrichtung mit dem Generatorsignal in einem Phasendetektor 33 verglichen. Die Phasenlage zwischen Summensignal und Generatorsignal kennzeichnet die Richtung der durchzuführenden Korrektur, damit liegt am Ausgang des Phasendetektors ein dem Vorzeichen des Korrektursignales entsprechendes Signal, das dem zweiten Eingang des Operationsverstärkers 34 zugeführt wird. Am Ausgang dieses Operations verstärkers 34 erscheint folglich ein vorzeichenrichtiges Korrektursignal, jedenfalls dann, wenn Asymmetrien im elektrooptischen System auftreten, welches zur Korrektur dem Wandler 20 zugeführt wird. Ist dagegen das Summensignal nach dem Bandpaßfilter 31 Null, erzeugt der Operationsverstärker 34 kein Korrektursignal, so daß eine radiale Lagekorrektur des Abtastkopfes 11 nicht stattfindet.

Damit die mechanische Amplitude des mit der Wobbel-Frequenz von z.B. 600 Hz schwingenden Abtastkopfes 11 unter einem vorbestimmten Maximalwert bleibt, ist ein Regelkreis bestehend aus Abtastkopf 11, Feder 18', Wandler 21, Bandpaß 37, automatischer Amplitudenregelung 36, Generator 35, Wandler 20 und Feder 18 vorgesehen. Die Schwingungen, deren Frequenz der Wobbel-Frequenz des Generators 35 von z.B. 600 Hz entsprechen, des Wandlers 20 werden über die elastische Feder 18 auf den Abtastkopf 11 übertragen, dessen Auslenkungen wiederum über die zweite Feder 18' auf den als Empfänger dienenden Wandler 21 gelangen. Seine Ausgangsspannung wird über das Bandpaßfilter 37, welches nur Schwingungen mit einer Frequenz von 600 Hz passieren läßt, der Schaltung 36 zugeführt, welche ein Signal zur Amplitudenregelung des Generators 35 liefert. Die Regelung ist hierbei derart, daß eine max vorgesehene Amplitude, welcher einer mechanischen Maximalamplitude des Abtastkopfes entspricht, nicht überschritten wird. Diese Maximalamplitude muß unter einem Wert bleiben, der ein sicheres Auslesen der Informationen gewährleistet. Bei einem bei CD-Platten üblichen Spurenabstand von etwa 1,6 μm darf die mechanische Amplitude des Abtastkopfes einen Wert von ± 0,05 μm nicht überschreiten.

**Patentansprüche**

1. Lesevorrichtung zum optischen Abtasten von auf der Licht reflektierenden Fläche eines bewegten plattenförmigen Trägers aufgezeichneten Informationen, bestehend aus einem an einem Arm verstellbar gelagerten Abtastkopf mit einer Lichtquelle, einer Optik zur Erzeugung wenigstens eines Lichtfleckes auf der Trägerfläche, aus einem Mittel zur Trennung des reflektierten Lichtes vom ausgesendeten Licht, aus Detektionselementen in Form von symmetrisch zur Mittellage des reflektierten Lichtstrahles angeordneten Fotodioden (27) zur Umwandlung des reflektierten Lichtes in elektrische Größen, welche den Informationen und einem Spursteuersignal entsprechen, ferner bestehend aus einer Steuerung (26) zur Nachführung des verstellbar gelagerten Kopfes in Abhängigkeit das Spursteuersignales gegen die Wirkung eines elastisch federnden Rückstellgliedes (18, 18') sowie mindestens einem elektromechanischen Wandler (20), vorzugsweise einem piezoelektrischen Wandler, welcher im Kraftfluß zwischen Abtastkopf, dem elastisch federnden Rückstellglied und einer gegenüber dem Abtastkopf feststehenden Halterung angeordnet ist, dadurch gekennzeichnet, daß der Wandler (20) mittels eines Generators (35) in niederfrequente Schwingungen geringer Amplitude versetzbar ist, daß die Fotoelemente (27A—D) derart angeordnet und geschaltet sind, daß sie bei Asymmetrien im optoelektrischen Kreis ein der Korrekturgröße entsprechendes Summensignal liefern, das nach Passieren eines Bandpaßfilters (31), dessen Mittenfrequenz der Generatorfrequenz entspricht, mittels eines Gleichrichters (32) in ein Korrektursignal umgewandelt wird, welches vorzeichenrichtig dem Wandler (20) zur radialen Lagekorrektur des Abtastkopfes (11) zugeführt wird, daß die Generatorschwingung mit dem Summensignal mittels eines Phasendetektors (33) zur Erzeugung eines dem Vorzeichen des Korrektursignales entsprechenden Vorzeichensignales verglichen wird und daß das dem Betrag des Korrektursignales entsprechende Ausgangssignal des Gleichrichters (32) mittels eines Operationsverstärkers (34) mit dem Vorzeichensignal zur Erzeugung des dem Wandler (20) zuzuführenden, vorzeichenrichtigen Korrektursignales verknüpft wird.

2. Lesevorrichtung nach Anspruch 1, dadurch gekennzeichnet, daß zwischen Abtastkopf (11) und der feststehenden Halterung ein zweiter elektromechanischer Wandler (21) angeordnet ist, dessen Ausgangssignal über ein Bandpaßfilter (37), dessen Mittenfrequenz der Generatorfrequenz entspricht, einer Schaltung zur automatischen Amplitudenregelung (36) zugeführt wird, deren Ausgang mit dem Steuereingang des Generators (35) zur Begrenzung der maximalen Generatoramplitude verbunden ist.

**Revendications**

1. Dispositif de lecture pour la détection optique d'informations enregistrées sur la surface réfléchissant la lumière d'un support mobile en forme de disque, comprenant une tête de détection avec une source lumineuse montée réglable sur un bras, un système optique destiné à générer au moins un point lumineux à la surface du support, un moyen pour séparer la lumière réfléchie de la lumière émise, des éléments de détection sous forme de photodiodes (27) disposées symétriquement à la position médiane du faisceau lumineux réfléchi en vue de convertir la lumière réfléchie en grandeurs électriques correspondant aux informations et à un signal de commande de piste, comprenant en outre une commande (26) pour l'asservissement de la tête montée réglable en fonction du signal de commande de piste contre l'action d'un organe de rappel élastique (18, 18') ainsi qu'au moins un convertisseur électromécanique (20), de préférence un convertisseur piézoélectrique situé dans la ligne de force entre la tête de détection, l'organe de rappel élastique et une fixation monté stationnaire par rapport à la tête de détection, caractérisé en ce qu'un générateur (35) peut imprimer au convertisseur (20) des oscillations basse fréquence de faible amplitude, que les éléments photoélectriques (27 A—D) sont disposés et commandés de façon à délivrer un signal de totalisation correspondant à la grandeur de correction lorsqu'il y a des asymétries dans le circuit opto-électrique, ce signal, après le passage dans un filtre passe bande (31) dont la fréquence moyenne correspond à la fréquence du générateur, est converti par un redresseur (32) en un signal correcteur qui est envoyé avec un signe exact au convertisseur (20) pour corriger la position radiale de la tête de détection (11), que l'oscillation du générateur est comparée avec le signal de totalisation au moyen d'un détecteur de phase (33) en vue de générer un signal de signe correspondant au signe du signal correcteur, et que le signal de sortie du convertisseur (32) correspondant au montant du signal correcteur est combiné par un amplificateur opérationnel (34) avec le signal de signe pour générer le signal correcteur de signe exact à appliquer au convertisseur (20).

2. Dispositif de lecture selon la revendication 1, caractérisé en ce qu'un deuxième convertisseur électromécanique (21) est disposé entre la tête de détection (11) et la fixation stationnaire, dont le signal de sortie passant par un filtre passe-bande (37) avec une fréquence moyenne correspondant à la fréquence du générateur, est appliqué à un circuit pour la régulation automatique de l'amplitude (36), dont la sortie est reliée à l'entrée de commande du générateur (35) pour limiter l'amplitude maximale du générateur.

**Claims**

1. A reading device for the optical scanning of information recorded on the light-reflecting surface of a moving Disc-like carrier, comprising a scanning head with a light source, which is mounted displaceably on an arm, an optical device for generating at least one spot of light on the carrier surface, a means for separating the reflected light from the emitted light, detection elements in the form of photodiodes (27) arranged symmetrically of the centre position of the reflected beam of light, for converting the reflected light into electrical magnitudes, which correspond to the information and a track control signal, further comprising a control (26) for readjusting the displaceably mounted head, in accordance with the track control signal, counter to the action of a resiliently sprung resetting element (18, 18') and (comprising) at least one electromechanical converter (20), preferably a piezoelectric converter, which is arranged in the path of forces between the scanning head, the resiliently sprung resetting element and a mounting which is fixed in relation to the scanning head, characterised in that the converter (20) may be set with the aid of a generator (35) in low frequency oscillation of low amplitude, that the photo elements (27A—D) are arranged and connected such that they deliver an aggregate signal which corresponds to the correction magnitude when there is asymmetry in the optoelectrical circuit, said signal corresponding to the generator frequency after passing through a band pass filter (31) the mean frequency of which corresponds to the generator frequency, and is converted into a correction signal with the aid of a rectifier (32), said correction signal being supplied with the correct sign to the converter (20) for radial position correction of the scanning head (11), that the generator oscillation is compared to the aggregate signal with the aid of a phase detector (33) for producing a sign signal corresponding to the sign of the correction signal, and that the output signal of the rectifier (32) corresponding to the amount of the correction signal is linked with the aid of an operational amplifier (34) to the sign signal for producing the correction signal which has the correct sign and is to be supplied to the converter (20).

2. A reading device acording to claim 1, characterised in that between the scanning head (11) and the fixed mounting is arranged a second electromechanical converter (21), the output signal of which is supplied via a band pass filter (37), the mean frequency of which corresponds to the generator frequency, to a circuit for automatic regulation of amplitude (36), the output of which is connected to the control input of the generator (35) for limiting the maximum generator amplitude.

radiales Fehlersignal

36

Autom. Ampl. Reg.

37

Band- paß 600 Hz

19

21

18'

18

20

19

14

11

26

Fein-Antrieb Radial

13

27

Tiefpaß

30

Differenzsignal

28

+ −

29

Band- paß 600 Hz

31  Summensignal

32

33

Phasen- detekt.

34

Korrektursignal

Generator 600 Hz

35

Generatorsignal

Vorzeichen des Korrektursignals

Betrag des Korrektursign.

1